# EUROPÄISCHE PATENTANMELDUNG

(11) **EP 1 610 071 A1**
(43) Veröffentlichungstag der Anmeldung: **28.12.2005**
(21) Anmeldenummer: 05450012.9
(22) Anmeldetag: 27.01.2005
(51) Int. Cl.: F24H 3/04

(54) **Vorrichtung zur Erzeugung von Heissluft**

(30) Priorität: 24.06.2004 AT 10752004
(71) Anmelder: "Dumag" Brenner-Technologie Ges.m.b.H., A-1030 Wien (AT)
(72) Erfinder: Landauf, Josef, 3465 Königsbrunn (AT); Marko, Adalbert Dkfm, 1040 Wien (AT)
(74) Vertreter: Atzwanger, Richard

(57) **Zusammenfassung**

Vorrichtung zur Erzeugung von Heißluft, welche für die Hitzebehandlung von Materialien, z.B. für Trocknungsvorgänge, verwendet ist, mit einer Brennerkammer, in welcher mittels mindestens eines Brenners Heißgase erzeugt werden, weiters mit einem Strömungskanal für die Zufuhr von Luft und mit einer Mischkammer, in welcher die von der Brennerkammer zugeführten Heißgase mit der über den Strömungskanal zugeführten Luft vermischt werden. Dabei ist in der Mischkammer eine Mischeinrichtung [6] vorgesehen, welche mehrere schräg zur Strömungsrichtung der Heißgase bzw. der Luft ausgerichtete Leitbleche [62, 63] aufweist, wobei einige der Leitbleche (63) in Strömungsrichtung radial von innen nach außen und einige der Leitbleche (62) radial von außen nach innen verlaufen [Fig. 4].

## Beschreibung

Die gegenständliche Erfindung betrifft eine Vorrichtung zur Erzeugung von Heißluft, welche für die Hitzebehandlung von Materialien, z.B. für Trocknungsvorgänge, verwendet wird, mit einer Brennerkammer, in welcher mittels mindestens eines Brenners Heißgase erzeugt werden, weiters mit einem Strömungskanal für die Zufuhr von Luft und mit einer Mischkammer, in welcher die von der Brennerkammer zugeführten Heißgase mit der über den Strömungskanal zugeführten Luft vermischt werden.

In einer Vielzahl von technischen Anlage besteht das Erfordernis, Heißluft zu erzeugen, welche für die Hitzebehandlung von Materialien verwendet wird. Es gilt dies z.B. für die Trocknung von Klärschlamm oder für die Erwärmung von Asphalt.

Bei der Erzeugung von Heißluft zur Hitzebehandlung von Materialien muss für die in einer Brennerkammer erfolgende Erzeugung von schadstofffreien Heißgasen der Verbrennungsvorgang bei Temperaturen von 1300°C bis 1500°C stattfinden. Da jedoch die zur Hitzebehandlung der Materialien verwendete Heißluft Temperaturen von 400°C bis 500°C aufweisen muss, besteht das Erfordernis, der in der Brennerkammer erzeugten Heißluft kalte Luft beizumischen. Bei der Mischung der in der Brennerkammer erzeugten Heißluft mit dieser Luft muss weiters gewährleistet werden, dass die zur Hitzebehandlung von Materialien verwendete Heißluft eine gleichmäßige Temperaturverteilung aufweist, wobei durch den Mischvorgang möglichst geringe Druckverluste verursacht werden sollen.

Diese Aufgaben werden erfindungsgemäß dadurch gelöst, dass in der Mischkammer eine Mischeinrichtung vorgesehen ist, welche mehrere schräg zur Strömungsrichtung der Heißgase bzw. der Luft ausgerichtete Leitbleche aufweist, wobei einige der Leitbleche in Strömungsrichtung radial von innen nach außen und einige der Leitbleche radial von außen nach innen verlaufen.

Vorzugsweise ist diese Vorrichtung mit einem Gehäuse ausgebildet, in welchem mindestens ein Brenner vorgesehen ist, durch welchen in der Brennerkammer Heißgase erzeugt werden, wobei der Strömungskanal für die Zufuhr von Luft sich radial außerhalb der Brennerkammer befindet. Dabei kann der Strömungskanal für die Zufuhr von Luft als die Brennerkammer umgebender Ringkanal ausgebildet sein.

Vorzugsweise weist die Mischeinrichtung einen Träger für mehrere Leitbleche auf, wobei sich die zuströmseitigen Enden einiger der Leitbleche nahe der zentralen Achse der Mischkammer befinden und diese Leitbleche in Strömungsrichtung radial nach außen verlaufen sowie weiters die zuströmseitigen Enden anderer der Leitbleche sich nahe der Peripherie der Mischkammer befinden und diese Leitbleche in Strömungsrichtung radial nach innen verlaufen. Dabei können die in unterschiedlichen Schräglagen zur Strömungsrichtung verlaufenden Leitbleche an dem als Reifen ausgebildeten Träger abwechselnd angeordnet sein. Weiters sind vorzugsweise zwei zueinander diametral angeordnete Leitbleche, welche in Strömungsrichtung von außen nach innen verlaufen, an ihren strömungsabseitigen Enden miteinander verbunden.

Der Gegenstand der Erfindung ist nachstehend anhand eines in der Zeichnung dargestellten Ausführungsbeispieles näher erläutert. Es zeigen:
- Fig. 1: eine Anlage zur Hitzebehandlung von Materialien, in Seitenansicht;
- Fig.2: einen Teil der Anlage gemäß Fig.1, in axonometrischer Darstel- lung;
- Fig. 3: den Teil der Anlage gemäß Fig.2, in einem Längsschnitt; und
- Fig.4, 4a, 4b, 4c: eine in der Anlage befindliche Mischeinrichtung, in axonometri- scher Darstellung, in Vorderansicht, in Seitenansicht und in Drauf- sicht.

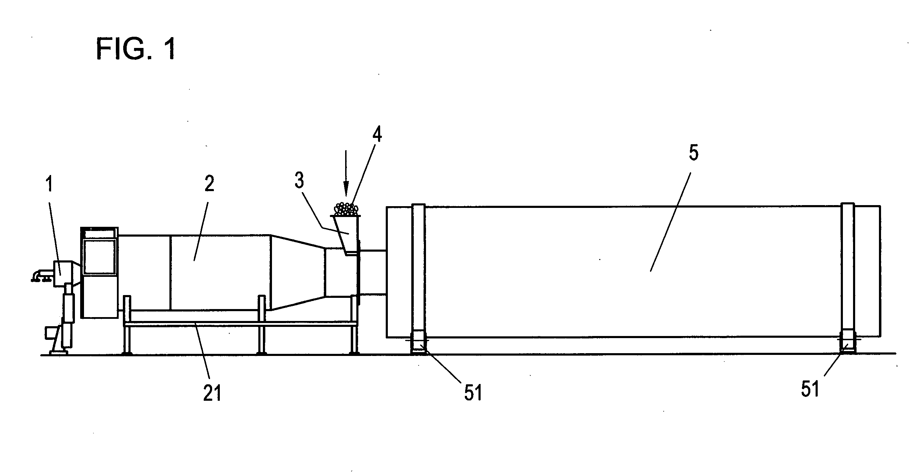

In Fig.1 ist eine Anlage zur Hitzebehandlung von Materialien, insbesondere zur Trocknung von Klärschlamm, dargestellt. Diese Anlage enthält einen Brenner 1, eine Einrichtung 2 zur Erzeugung von Heißluft mit einem Strömungskanal, einen Zufuhrschacht 3 für dasjenige Material 4, welches der Hitzebehandlung unterzogen wird und eine Trommel 5, in welcher dieses Material weiterbehandelt wird. Die Einrichtung 2 ist an einem Traggestell 21 fest angeordnet. Demgegenüber ist die Trommel 5 auf Walzen 51 gelagert, wodurch sie um ihre Längsachse verdrehbar ist und als Drehtrommel wirkt.

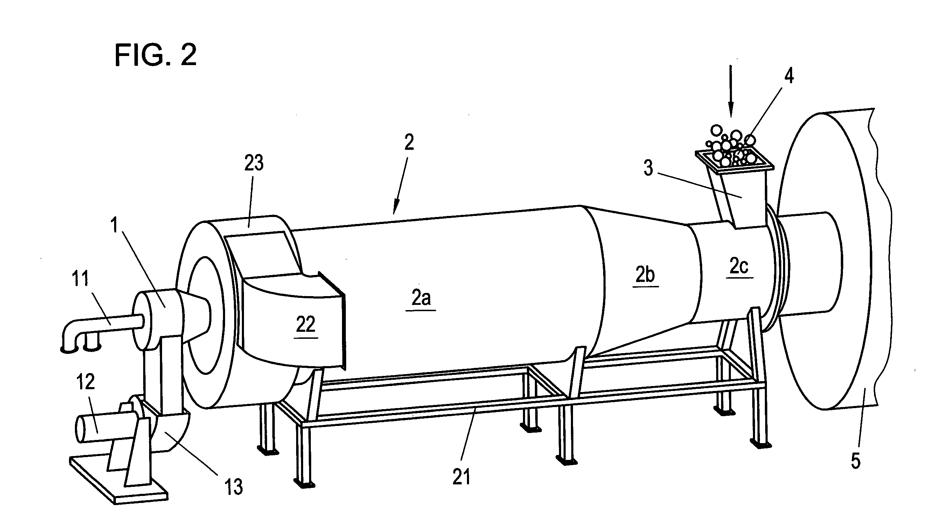

Wie dies aus Fig.2 ersichtlich ist, ist der Brenner 1 mit einer ersten Leitung 11 für die Zufuhr eines brennbaren Mediums, z.B. Gas, und mit einer zweiten Leitung 12 sowie mit einem Gebläse 13 für die Zufuhr von Verbrennungsluft zum Brenner 1 ausgebildet. Weiters ist die Einrichtung 2 mit einem Ansaugstutzen 22 für Luft, insbesondere für Umluft, und mit einem am zuströmseitigen Ende der Einrichtung 2 ringförmig ausgebildeten Luftkanal 23 versehen. Die Einrichtung 2 besteht aus einem zylindrischen Bereich 2a, innerhalb dessen sich eine Brennerkammer befindet, in welcher die Heißluft für die Hitzebehandlung der Materialien erzeugt wird, weiters aus einem an diesen anschließenden, sich konisch verjüngenden Bereich 2b, in welchem die Strömungsgeschwindigkeit der Heißluft vergrößert wird und aus einem an diesen anschließenden zylindrischen Bereich 2c, welchem über den Zufuhrstutzen 3 das mittels der Heißluft zu behandelnde Material 4 zugeführt wird.

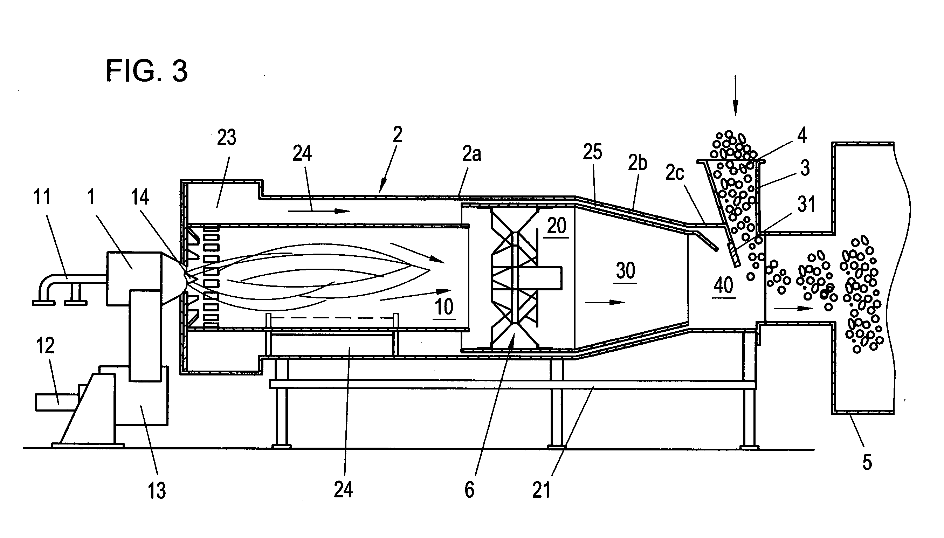

Wie dies weiters aus Fig.3 ersichtlich ist, befindet sich in der Einrichtung 2 die Brennerkammer 10, innerhalb welcher mittels des mit einer Brennerdüse 14 versehenen Brenners 1 von Schadstoffen freie Brenngase erzeugt werden, welche Temperaturen von 1300°C bis 1500°C aufweisen. Da demgegenüber die Hitzebehandlung des Materials 4 bei Temperaturen von 400°C bis 500°C erfolgen soll, besteht das Erfordernis, den aus der Brennerkammer 10 abströmenden Heißgasen kalte Luft beizumischen. Hierfür schließt an den ringförmigen Kanal 23 ein die Brennerkammer 10 umgebender weiterer ringförmiger Kanal 24 an, durch welchen in eine in Strömungsrichtung an die Brennerkammer 10 anschließende Mischkammer 20 kalte Luft eingeleitet wird.

Da die Heißluft zur Hitzebehandlung des Materials 4 eine gleichmäßig Temperaturverteilung aufweisen muss, befindet sich in der Mischkammer 20 eine Mischeinrichtung 6, durch welche eine optimale Vermischung der aus der Brennerkammer 10 austretenden Heißgase und der durch den ringförmigen Kanal 24 zugeführten kalten Luft erfolgt. Die hierdurch erzeugte Heißluft weist eine Temperatur von etwa 400°C bis 500°C auf. Diese Heißluft wird durch einen in Strömungsrichtung sich konisch verjüngenden Strömungskanal 30 hindurchgeleitet, wodurch deren Strömungsgeschwindigkeit erhöht wird. Die Heißluft gelangt in weiterer Folge in eine Behandlungskammer 40, in welcher sie auf das zu behandelnde Material 4 gelangt. Dieses Material 4 wird mittels der Heißluft in die Drehtrommel 5 gefördert, in welcher eine weitere Bearbeitung dieses Materials erfolgt.

Wie dies weiters aus Fig.3 ersichtlich ist, zweigt vom ringförmigen Kanal 24 ein weiterer Kanal 25 ab, welcher sich im oberen Bereich der Mischkammer 20 und der Strömungskammer 30 befindet und welcher beim Auslass der Zufuhreinrichtung 3 in der Behandlungskammer 40 mündet. Die durch diesen Kanal 25 hindurchströmende kalte Luft dient dazu, eine am unteren Ende der Zufuhreinrichtung 3 vorgesehene Rutschleiste 31, welche aus einem hochgleitfähigen Kunststoffmaterial, nämlich Polytetrafluorethylen, z.B. der Markenbezeichnung TEFLON, hergestellt ist, zu kühlen, da sie andernfalls durch die in der Behandlungskammer 40 herrschende Temperatur zerstört werden würde.

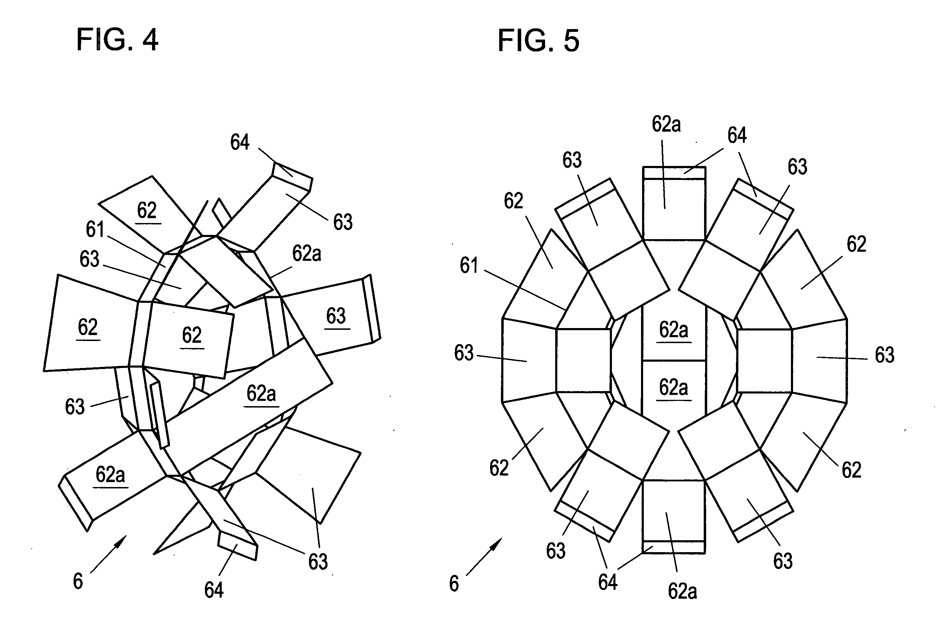

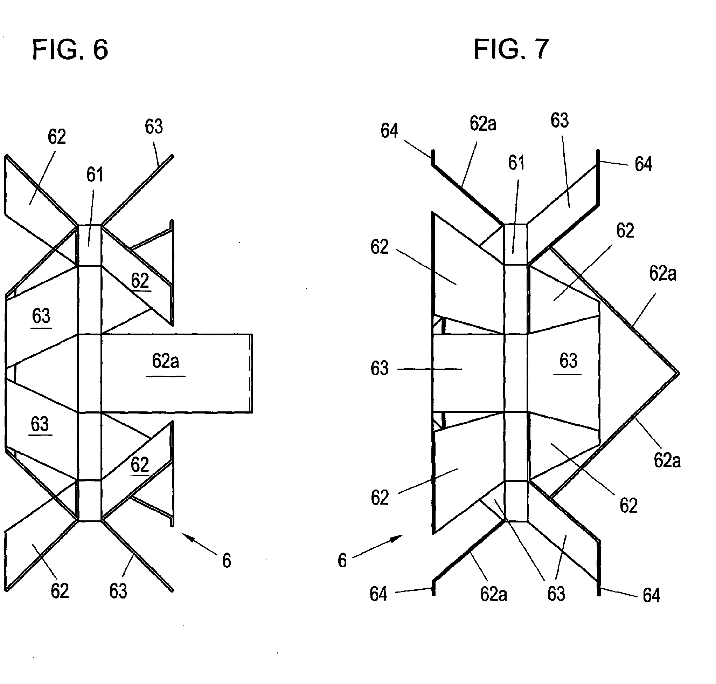

Nachstehend sind anhand der Fig.4, 4a, 4b und 4c die Ausbildung und die Wirkungsweise der in der Mischkammer 20 befindlichen Mischeinrichtung 6 erläutert:
Die Mischeinrichtung 6 besteht aus einem zwölfeckigen Reifen 61, an welchem zwölf sich in Strömungsrichtung der Heißgase bzw. der Luft erstreckende Leitbleche 62 und 63 befestigt sind, welche quer zur Strömungsrichtung der Heißgase bzw. der Luft ausgerichtet sind. Dabei befinden sich die in Strömungsrichtung vorderen Enden einer ersten Gruppe von Leitblechen 62 im radial äußeren Bereich der Mischkammer 20 und erstrecken sie sich derart schräg zur Strömungsrichtung, dass sich deren strömungsabseitigen Enden im radial inneren Bereich der Mischkammer 20 befinden. Demgegenüber befinden sich die vorderen Enden einer zweiten Gruppe von Leitblechen 63 im radial inneren Bereich der Mischkammer 20 und erstrecken sie sich in Strömungsrichtung radial nach außen, so dass sich deren strömungsabseitigen Enden im radial äußeren Bereich der Mischkammer 20 befinden. Weiters sind zwei diametral gegenüberliegende Leitbleche 62a, deren vordere Enden sich im radial äußeren Bereich der Mischkammer 20 befinden, an ihren strömungsabseitigen Enden miteinander verbunden. Schließlich sind einige der Leitbleche mit Abwinkelungen 64 ausgebildet, welche zur Befestigung der Mischeinrichtung 6 dienen.

Durch diese Ausbildung der Mischeinrichtung 6 wird erzielt, dass Anteile der aus der Brennerkammer 10 abströmenden Heißgase innerhalb der Mischkammer 20 radial nach außen und daneben strömende Anteile der Heißgase radial nach innen gleitet werden. In analoger Weise werden Anteile der durch den Strömungskanal 24 hindurch zugeführten kalten Luft in Strömungsrichtung radial nach innen geleitet. Durch die Leitbleche 62a werden Anteile der Heißgase quer zur Strömungsrichtung radial nach außen geleitet.

Durch eine derartige Mischeinrichtung 6 wird somit eine sehr wirkungsvolle Durchmischung der aus der Brennerkammer 20 abströmenden Heißgase mit der über den Strömungskanal 25 zugeführten Luft erzielt, wodurch die angestrebte gleichmäßige Temperaturverteilung der für den Bearbeitungsvorgang erforderlichen Heißluft gewährleistet wird.

## Patentansprüche

1. Vorrichtung zur Erzeugung von Heißluft, welche für die Hitzebehandlung von Materialien, z.B. für Trocknungsvorgänge, verwendet ist, mit einer Brennerkammer (10), in welcher mittels mindestens eines Brenners (1) Heißgase erzeugt werden, weiters mit einem Strömungskanal (23, 24) für die Zufuhr von Luft und mit einer Mischkammer (20), in welcher die von der Brennerkammer (10) zugeführten Heißgase mit der über den Strömungskanal (23, 24) zugeführten Luft vermischt werden, **dadurch gekennzeichnet, dass** in der Mischkammer (20) eine Mischeinrichtung (6) vorgesehen ist, welche mehrere schräg zur Strömungsrichtung der Heißgase bzw. der Luft ausgerichtete Leitbleche (62, 63) aufweist, wobei einige der Leitbleche (63) in Strömungsrichtung radial von innen nach außen und einige der Leitbleche (62) radial von außen nach innen verlaufen.

2. Vorrichtung mit einem Gehäuse, in welchem mindestens ein Brenner (1) vorgesehen ist, durch welchen in der Brennerkammer (10) Heißgase erzeugt werden, **dadurch gekennzeichnet, dass** der Strömungskanal (24) für die Zufuhr von Luft sich radial außerhalb der Brennerkammer (10) befindet.

3. Vorrichtung nach Patentanspruch 2, **dadurch gekennzeichnet, dass** der Strömungskanal für die Zufuhr von Luft als die Brennerkammer (10) umgebender Ringkanal (24) ausgebildet ist.

4. Vorrichtung nach einem der Patentansprüche 1 bis 3, **dadurch gekennzeichnet, dass** die Mischeinrichtung (6) einen Träger (61) für mehrere Leitbleche (62, 63) aufweist, wobei sich die zuströmseitigen Enden einiger der Leitbleche (63) nahe der zentralen Achse der Mischkammer (20) befinden und diese Leitbleche (63) in Strömungsrichtung radial nach außen verlaufen und sich die zuströmseitigen Enden anderer der Leitbleche (62) nahe der Peripherie der Mischkammer (20) befinden und diese Leitbleche (62) in Strömungsrichtung radial nach innen verlaufen.

5. Vorrichtung nach Patentanspruch 4, **dadurch gekennzeichnet, dass** die in unterschiedlichen Schräglagen zur Strömungsrichtung verlaufenden Leitbleche (62, 63) an dem als Reifen (61) ausgebildeten Träger abwechselnd angeordnet sind.

6. Vorrichtung nach einem der Patentansprüche 4 und 5, **dadurch gekennzeichnet, dass** zwei zueinander diametral angeordnete Leitbleche (62a), welche in Strömungsrichtung von außen nach innen verlaufen, an ihren strömungsabseitigen Enden miteinander verbunden sind.
